Europäisches Patentamt

European Patent Office

Office européen des brevets

(11) Veröffentlichungsnummer: **0 379 002 B1**

# EUROPÄISCHE PATENTSCHRIFT

(45) Veröffentlichungstag der Patentschrift:
08.01.92 Patentblatt 92/02

(51) Int. Cl.⁵: **F16L 23/12**

(21) Anmeldenummer: **90100135.4**

(22) Anmeldetag: **04.01.90**

(54) Stossverbindung zwischen zwei flachovalen Rohrabschnitten aus Blech.

(30) Priorität: **19.01.89 DE 3901394**
**16.08.89 US 394623**

(43) Veröffentlichungstag der Anmeldung:
**25.07.90 Patentblatt 90/30**

(45) Bekanntmachung des Hinweises auf die
Patenterteilung:
**08.01.92 Patentblatt 92/02**

(84) Benannte Vertragsstaaten:
**AT BE CH DE DK ES FR GB IT LI NL SE**

(56) Entgegenhaltungen:
**EP-A- 0 204 934**
**FR-A- 1 563 983**
**US-A- 3 199 901**

(73) Patentinhaber: **METU-System Meinig KG**
**Seitinger Strasse 186**
**W-7201 Rietheim-Weilheim 2 (DE)**

(72) Erfinder: **Meinig, Manfred**
**Goethestrasse**
**7201 Rietheim-Weilheim 2 (DE)**
Erfinder: **Arnoldt, Peter J.**
**525 Coal Valley Road**
**Clairton, PA 15102 (US)**
Erfinder: **Arnoldt, Frederick J.**
**3903 Mimosa Drive**
**Bethel Park, PA 15102 (US)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen (DE)**

## Beschreibung

Die Erfindung betrifft eine Stoßverbindung zwischen zwei flachovalen Rohrabschnitten aus Blech nach dem Oberbegriff des Patentanspruchs 1.

Es ist bekannt, die Enden von aneinanderstoßenden Abschnitten von Heizungs-, Klimatisierungs- und Lüftungskanälen mit rechtwinklig zueinander stehenden Wänden durch Stoßverbindungen dicht aneinander festzulegen. Die Stoßverbindungen weisen Profilflansche der unterschiedlichsten Formen auf, die an den Enden der Kanalabschnitte befestigt und sodann miteinander verbunden, meist verschraubt werden. Die erforderlichen, jeweils den Breiten der Rohrwände entsprechenden geraden Flanschabschnitte können dabei als Teilstücke von fabrikmäßig gelieferten Profilstäben abgesägt und mittels geeigneter Verbindungseinrichtungen zu einem Flanschrahmen zusammengefügt werden.

Auch bei kreisrunden Blechrohren sind zahlreiche Verbindungsarten der Rohrabschnitte bekannt, wobei Profilringe unterschiedlicher Form für die herzustellende Stoßverbindung Verwendung finden. Auch diese runden Stoßverbindungen lassen sich leicht herstellen, indem auf handelsüblichen Maschinen Ringe aus den unterschiedlichen Profilen zu einem Kreisring gebogen werden, der dann am Ende des Rohrabschnitts befestigt wird. Der Durchmesser läßt sich entsprechend dem Rohrdurchmesser beliebig wählen. Die Rundrohrflansche werden daher im Gegensatz zu Rechteckflanschen, bei denen keine fabrikmäßige Vorfertigung nötig ist, fabrikmäßig voll vorgefertigt.

Kreisrunde Blechrohre lassen sich zwar verhältnismäßig einfach mit einem Längsfalz oder noch einfacher als Wickelfalzrohre mit einem spiralförmig verlaufenden Falz herstellen. Sie haben daher einen günstigen Herstellungspreis und weisen eine gute Luftdichtigkeit auf. In vielen Fällen haben sie jedoch den entscheidenden Nachteil, daß ihre Bauhöhe im Verhältnis zum Rohrquerschnitt groß ist. Diesen Nachteil haben sie nicht mehr, wenn sie nach ihrer Herstellung in eine flachovale Form gestreckt werden. Die flachovale Form kann in idealer Weise den jeweils vorhandenen Platzverhältnissen angepaßt werden, indem der Querschnitt mehr oder weniger stark abgeflacht wird. Dennoch werden flachovale Blechrohre relativ selten eingesetzt. Dies dürfte seinen Grund darin haben, daß es keine wirklich brauchbare Stoßverbindung gibt, die ein wirksames und dichtes Verbinden der einzelnen Rohrabschnitte auf der Baustelle in wirtschaftlicher Weise ermöglicht.

Bei einer bekannten Stoßverbindung für flachovale Rohre müssen in die Enden der aneinanderstoßenden Rohrabschnitte verhältnismäßig aufwendig aus einem Stück herzustellende ovale Steckverbinder eingeschoben und an den Enden befestigt werden. Bereits die Befestigung der Steckverbinder an den Rohrabschnittenden ist auf der Baustelle mit großen Schwierigkeiten verbunden, da der flache Bereich eines flachovalen Rohres nicht durch Wölbung stabilisiert ist, sondern den anzusetzenden Werkzeugen, wie Bohr-, Niet-, Schraub- und Punktschweißwerkzeugen, keinen geeigneten Gegenhalt bietet. Nach dem mechanischen Verbinden muß dann die gesamte Stoßverbindung noch abgedichtet werden, beispielsweise durch Abspritzen mit Mastik oder durch Überkleben mit einem Klebeband. Beides ist sehr zeitaufwendig und gibt dem fertigen Lüftungsrohr kein besonders attraktives Aussehen. Besonders schwierig werden alle diese Arbeiten, wenn das Lüftungsrohr direkt unter der Decke oder nahe an einer Wand angebracht wird, was häufig vorkommt.

Da die geschilderte bekannte Stoßverbindung keine Aussteifung des Lüftungsrohres bewirkt, sondern selbst sehr labil ist, wurden auch schon Stoßverbindungen mit auf die Rohrabschnittenden aufgesetzten Flanschen aus ovalgebogenen Winkeleisen verwendet. Die Herstellung dieser Flansche ist aber extrem schwierig und teuer. Auch die Montage solcher Flansche mit einer Vielzahl von Schrauben ist aufwendig. Auch sind die Flansche korrosionsgefährdet und sehen nicht gut aus.

Die Anwendung der bekannten Stoßverbindungen ist aber nicht nur wegen der mangelnden Stabilität und der schwierigen Adichtung unzweckmäßig, sondern im Hinblick auf die zahlreichen möglichen und in der Praxis erforderlichen flachovalen Querschnittsformen auch in der Herstellung und Lagerhaltung sehr kostspielig.

Durch die Erfindung soll eine Stoßverbindung der eingangs genannten Art geschaffen werden, die einfach und wirtschaftlich herstellbar sowie auf der Baustelle montierbar ist und eine stabile und dichte Verbindung zwischen zwei flachovalen Rohrabschnitten ergibt.

Diese Aufgabe wird erfindungsgemäß durch die kennzeichnenden Merkmale des Patentanspruchs 1 gelöst.

Durch Herstellung und Lagerhaltung von nur verhältnismäßig wenigen gebogenen Formen von Flanschabschnitten lassen sich schnell und einfach Flanschrahmen in unterschiedlichsten flachovalen Querschnitten herstellen, indem gerade Flanschabschnitte, deren Länge den jeweiligen Raumverhältnissen ideal angepaßt werden kann, von Profilstangen größerer Länge abgesägt und mit den gebogenen Flanschabschnitten zusammengefügt werden. Anschließend werden die Flanschrahmen jeweils an den zugehörigen Rohrenden befestigt, was vorzugsweise durch Punktschweißen, hilfsweise auch durch Nieten oder Schrauben, erfolgen kann, wobei die erfindungsgemäß verwendeten Hohlprofilflansche den Befestigungsvorgängen einen ausreichenden Widerstand gegen Verzerrung entgegensetzen. Abschließend sind die aneinanderliegenden Flanschrahmen durch Verbindungseinrichtungen aneinander festzulegen. Da die erfindungsgemäß verwendeten Flanschrahmen trotz ihrer einfachen Herstellung außerordentlich stabil sind, läßt sich eine stabile und dichte Verbindung durch wenige Verbindungsschrauben unter geringem Arbeitsaufwand erzielen, wobei für kleine Kanäle zwei Verbindungsbolzen und für größere Kanäle vier Verbindungsbolzen im allgemeinen ausreichen.

Die Unteransprüche betreffen vorteilhafte Ausgestaltungen der Erfindung.

Insbesondere die Ausbildung der Halteeinrichtungen als in die Enden der Flanschabschnitte einsteckbare Zwischenverbinder läßt ein schnelles und einfaches Zusammensetzen des jeweils erforderlichen Flanschrahmens zu. Die Zwischenverbinder können bereits fabrikmäßig an den gebogenen Flanschabschnitten festgelegt werden und müssen dann lediglich an die dort in der passenden Länge abzusägenden geraden Flanschabschnitte angefügt werden.

In besonderen Fällen, insbesondere bei sehr langen geraden Flanschabschnitten des jeweiligen Flanschrahmens können statt Schraubverbindungen oder zusätzlich zu diesen zwischen den einzelnen Schraubverbindungen noch besondere Klemmeinrichtungen, wie Spannklammern oder dergl., auf die Flanschabschnitte aufgesetzt werden. Hierzu können besondere Wulste zum Angreifen der Klemmeinrichtungen an den Flanschprofilen vorgesehen werden.

Die Abdichtung der erfindungsgemäßen Stoßverbindung läßt sich zusätzlich durch eine zwischen die beiden Flanschrahmen eingefügte Dichtung und erforderlichenfalls eine zwischen Rohrabschnitt und Flanschrahmen abdichtende dauerplastische Dichtungsraupe noch verbessern.

Anhand der Figuren werden Ausführungsbeispiele der Erfindung näher erläutert. Es zeigen

| | |
|---|---|
| Fig. 1 | eine Schnittansicht durch eine Ausführungsform der erfindungsgemäßen Stoßverbindung mit vier Verbindungsschrauben gemäß der Linie I-I in Fig. 2, |
| Fig. 2 | einen vergrößerten Teilschnitt gemäß der Linie II-II in Fig. 1, |
| Fig. 3 | eine vergrößerte Schrägansicht eines in den Ausführungsformen gemäß Fig. 1 und 2 verwendeten Zwischenverbinders, |
| Fig. 4 bis 6 | Teilschnitte durch andere Ausführungsformen des Flanschrahmens mit eingeschobenem Rohrabschnittende, |
| Fig. 7 und 8 | zwei Ausführungsformen des in Fig. 3 gezeigten Zwischenverbinders in ihrer Festlegung an je zwei Flanschabschnittenden, |
| Fig. 9 | einen Schnitt längs der Linie IX-IX in Fig. 7. |
| Fig. 10 | eine der Fig. 1 entsprechende Schnittansicht einer weiteren Ausführungsform des Flanschrahmens, |
| Fig. 11 | eine vergrößerte Teilschrägansicht eines Ausschnittes aus Fig. 10, |
| Fig. 12 | eine der Fig. 11 entsprechende Schrägansicht mit eingesetztem Verbindungsbolzen, |
| Fig. 13 | eine der Fig. 1 entsprechende Schnittansicht einer weiteren Ausführungsform des Flanschrahmens, |
| Fig. 14 | eine vergrößerte Explosionsdarstellung eines Ausschnittes aus Fig. 13, |
| Fig. 15 | eine Explosionsdarstellung einer weiteren Ausführungsform des erfindungsgemäßen Flanschrahmens, |
| Fig. 16 | eine Ansicht des in Fig. 15 dargestellten Flanschrahmens in zusammengebautem Zustand, |
| Fig. 17 | eine Teilansicht eines Zwischenverbinders mit den Enden eines geraden und eines gebogenen Flanschabschnittes, |
| Fig. 18 | einen Schnitt längs der Linie XVIII-XVIII in Fig. 17, |
| Fig. 19 | einen Schnitt längs der Linie XIX-XIX in Fig. 17, |
| Fig. 20 | eine Schrägansicht des Zwischenverbinders gemäß Figuren 17 bis 19, |
| Fig. 21 | eine der Fig. 2 entsprechende Schnittansicht durch eine weitere Ausführungsform der erfindungsgemäßen Stoßverbindung ohne eingesetzten Verbindungsbolzen, |
| Fig. 22 | eine der Fig. 21 entsprechende Schnittansicht mit eingesetztem Verbindungsbolzen, |
| Fig. 23 bis 26 | den Figuren 4 bis 6 entsprechende Teil schnitte durch weitere Ausführungsformen des Flanschrahmens, |
| Fig. 27 | eine Teilschrägansicht einer weiteren Ausführungsform der erfindungsgemäßen Stoßverbindung, |
| Fig. 28 | einen Teilschnitt durch die in Fig. 27 dargestellte Ausführungsform in auseinandergebautem Zustand, |
| Fig. 29 | einen der Fig. 28 ähnlichen Schnitt in zusammengebautem Zustand, |
| Fig. 30 | eine Explosionsdarstellung der in den Figuren 17 bis 19 dargestellten Ausführungsform und |

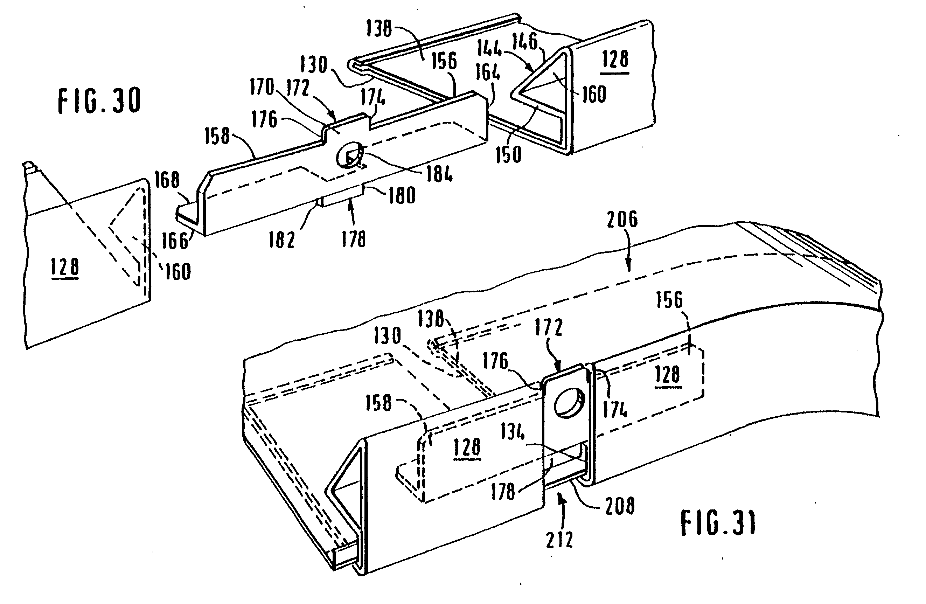

Fig. 31          eine Teilschrägansicht der gleichen Ausführungsform in zusammengebautem Zustand.

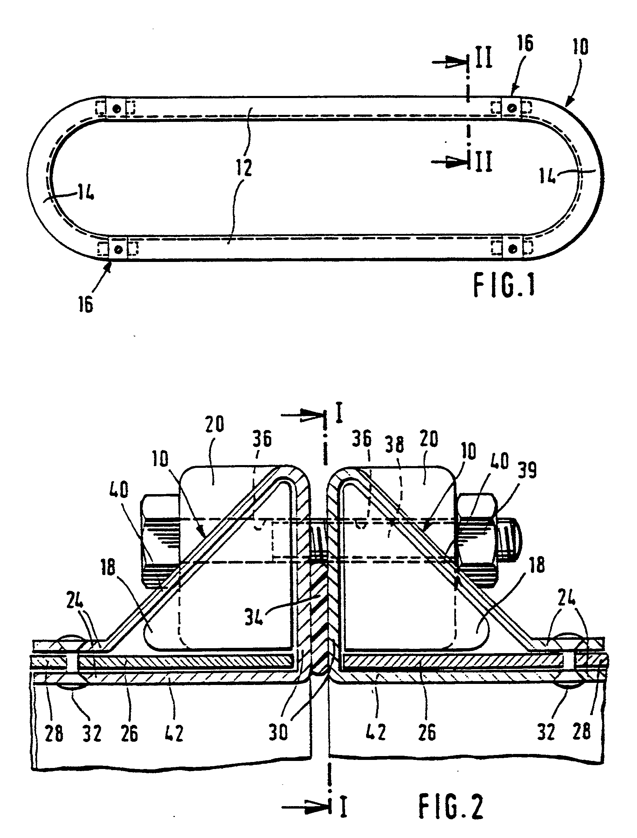

Der Aufbau einer Ausführungsform der erfindungsgemäßen. Stoßverbindung ist am besten aus Fig. 2 ersichtlich, während die Form von zwei Ausführungsbeispielen des auf einen Rohrabschnitt aufgesetzten Flanschrahmens und damit auf die Form des Rohrabschnittes selbst aus Fig. 1 ersichtlich ist. Bei der Ausführungsform gemäß Fig. 1 ist der allgemein mit 10 bezeichnete Flanschrahmen aus zwei verhältnismäßig langen geradlinigen Flanschabschnitten 12 und zwei halbkreisförmig gebogenen Flanschabschnitten 14 zusammengesetzt.

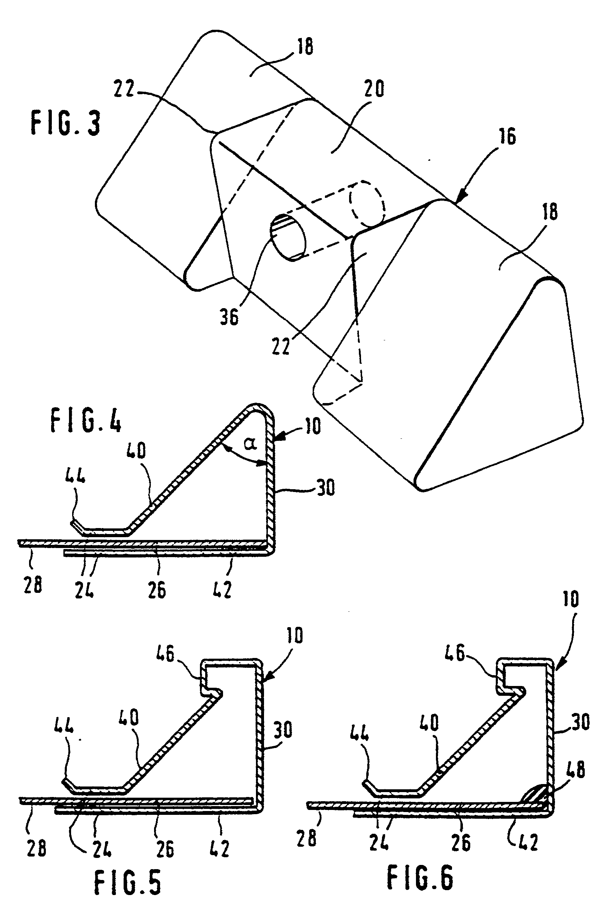

Die Stoßstellen der einzelnen Flanschabschnitte 12, 14 sind etwas auseinandergerückt und durch allgemein mit 16 bezeichnete Zwischenverbinder zusammengehalten. Die Form der Zwischenverbinder ist am besten aus Fig. 3 zu ersehen. Sie bestehen aus zwei in die offenen Enden der Flanschabschnitte passenden Halteteilen 18 mit dreieckförmigem Querschnitt und einem zwischen den Halteteilen 18 einstückig mit diesen angeordneten Befestigungsteil 20 mit etwa rechteckigem Querschnitt, an dessen Stirnwänden 22 die Enden der Flanschabschnitte zur Anlage kommen. Die Halteteile 18 sind in einer weiter unten näher erläuterten Weise in den Enden der Flanschabschnitte 12, 14 verankert. Diese Zwischenverbinder können sehr preisgünstig durch Druckguß oder als Schmiedeteil hergestellt werden. Es ist auch möglich, sie als profilierte Blechteile zu pressen. Wenn die dreieckiges Profil aufweisenden beiden Halteteile 18 nicht sehr lang ausgebildet werden, können die Zwischenverbinder 16 praktisch für alle Krümmungen der gebogenen Flanschabschnitte verwendet werden. Andernfalls müssen die Halteteile entsprechend den Krümmungen oder umgekehrt die Enden der Flanschabschnitte den geraden Halteteilen angepaßt werden. Dies bereitet keine herstellungsmäßigen Schwierigkeiten. ·

Wie aus Fig. 2 ersichtlich, besitzen die Flanschrahmen 10 ein allgemein dreieckförmiges Hohlprofil, das in einer von der etwa mit der Linie II-II in Fig. 2 zusammenfallenden Stoßverbindungsfläche wegweisenden Richtung in zwei parallelen und in geringem Abstand voneinander verlaufenden Stegen 24 endet. Zwischen die Stege 24 ist passend jeweils ein Ende 26 eines Rohrabschnitts 28 bis zum Anschlag an der senkrecht zum Rohrabschnitt verlaufenden Flanschwand 30 des Flanschrahmens 10 eingeschoben und in gewissen Abständen durch Punktschweißungen 32 daran festgelegt. Zwischen die sich gegenüberliegenden Flanschwände 30 ist ein Dichtstreifen 34 eingefügt.

Die Befestigungsteile 20 der Zwischenverbinder 16 weisen jeweils ein parallel zur Wand der Rohrabschnitte 28 verlaufendes Schraubloch 36 auf, durch das zum Verschrauben der sich gegenüberliegenden Flanschrahmen 10 jeweils Schraubenbolzen 38 geführt sind, wobei die beiden Befestigungsteile 20 durch eine auf den Schraubbolzen 38 aufgesetzte Mutter 39 gegeneinander verspannt sind. Das hierdurch über die Halteteile 18 auf die Flanschrahmen 10 ausgeübte Kippmoment wird im wesentlichen durch die unter 30° bis 60°, vorzugsweise etwa 45° gegenüber der Wand der Lüftungsrohrabschnitte 28 geneigte Wand 40 des Flanschprofils aufgenommen. Die dritte Wand 42 des Hohlprofils der Flanschrahmen 10 verläuft senkrecht zur Flanschwand 30 und liegt parallel an der Innenwand des jeweiligen Rohrabschnitts 28 an.

Die Figuren 4 bis 6 zeigen abgewandelte Ausführungsformen des Flanschprofils der Flanschrahmen 10. Bei diesen Ausführungsformen ist an dem äußeren Steg 24 ein nach außen abgewinkelter Einfädelrand 44 vorgesehen, der zum leichteren Einfädeln des Endes 26 des Rohrabschnitts 28 in das Hohlprofil dient. In Fig. 4 ist der Winkel α zwischen den beiden Wänden 30 und 40 des Hohlprofils eingezeichnet, der bei den in den Figuren 4 bis 6 dargestellten Ausführungsformen etwa 45° beträgt.

Bei den Ausführungsformen gemäß Figuren 5 und 6 ist zusätzlich am äußeren Ende der Wand 40 ein parallel zum Rohrabschnitt 28 vorspringender Wulst 46 vorgesehen, der zur Verankerung von an sich bekannten Klemmeinrichtungen, wie C-förmigen Spannklammern oder dgl., dient, falls solche bei längeren geraden Flanschabschnitten erforderlich sind.

In Fig. 6 ist darüber hinaus eine in den rechten Winkel des Hohlprofils eingespritzte durchlaufende Dichtungsraupe 48 aus dauerplastischem Material eingezeichnet, die zur Abdichtung zwischen Rohrabschnitt 28 und Profilrahmen dient. Beim Einschieben des Rohrabschnitts 28 dringt die Kante des Endes 26 in die Dichtungsraupe 48 ein, wodurch sich automatisch eine ausgezeichnete Abdichtung ergibt. Diese oder eine entsprechende Dichtungsraupe ist vorzugsweise bei allen Ausführungsformen vorgesehen.

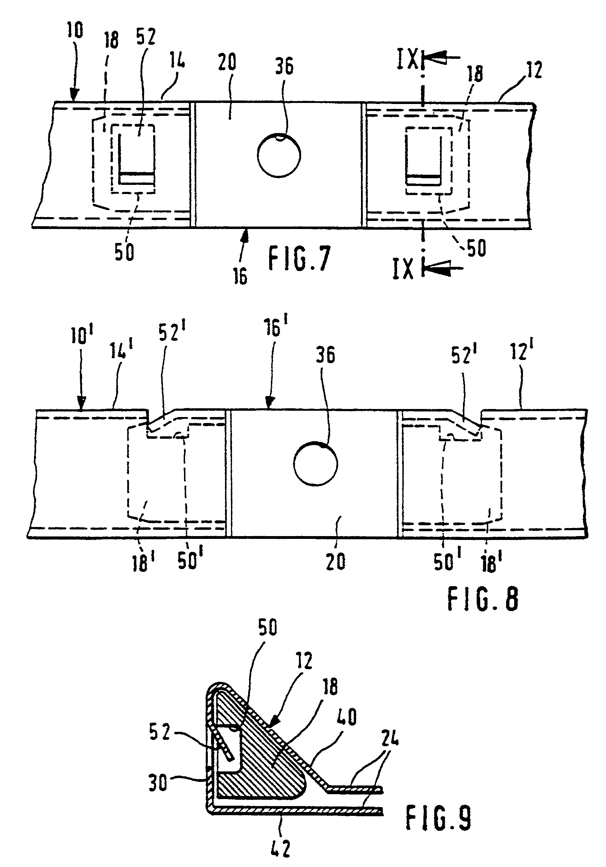

Die Verankerung der Halteteile 18 bzw. 18' der Zwischenverbinder 16 bzw. 16' in den Flanschabschnitten 12, 14 bzw. 12', 14' der Flanschrahmen 10 bzw. 10' ist aus den Figuren 7 bis 9 ersichtlich. Bei der in den Figuren 7 und 9 dargestellten Ausführungsform ist in der der senkrechten Flanschwand 30 anliegenden Fläche jedes Halteteils 18 eine Vertiefung 50 mit rechteckigem Querschnitt vorgesehen, in welche ein aus der Wand 30 teilausgestanzter Lappen 52 zur Verankerung des Halteteils 18 am Flanschrahmen 10 eingedrückt ist. Bei der in Fig. 8 dargestellten Ausführungsform sind die Vertiefungen 50' an dem dem Winkel α (siehe Fig. 4) anliegenden Teil der Halteteile 18' angebracht, und es sind entsprechende Lappen 52' des Flanschrahmens 10' teilausgestanzt und in die Vertiefungen 50' eingedrückt.

4

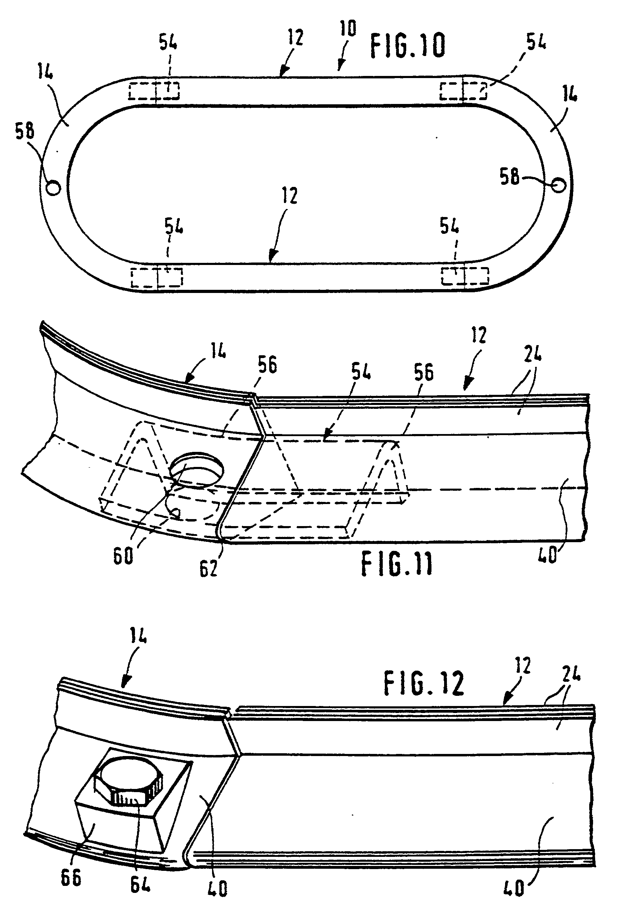

Bei den in den Figuren 10 bis 14 dargestellten Ausführungsformen sind für gleiche oder entsprechende Teile die gleichen Bezugszeichen verwendet wie bei den vorangehenden Ausführungsbeispielen.

Die Ausführungsform gemäß den Figuren 10 bis 12 sieht eine andere Ausführungsform von Zwischenverbindern 54 vor, die keinen mittleren Befestigungsteil mit Schraubloch, sondern lediglich zwei ineinander übergehende L-förmige Halteteile 56 aufweisen. Beim Einstecken der beiden Halteteile 56 in die Enden der angrenzenden Flanschabschnitte 12 und 14 wird somit kein Spalt zwischen diesen Enden mehr erzeugt, wie bei der vorher erläuterten Ausführungsform, sondern die beiden Enden stoßen, wie aus den Figuren 11 und 12 ersichtlich, unmittelbar aneinander. In nicht näher gezeigter Weise können dabei die Halteteile 56 in den Enden der Flanschabschnitte 12, 14 wahlweise festgelegt werden, etwa wie in den Figuren 7 bis 9 gezeigt. Um trotzdem eine Befestigung der beiden einander gegenüberliegenden Flanschrahmen 10 zu ermöglichen, können den Flanschrahmen durchsetzende Schraublöcher 58, z.B. in der Mitte der gebogenen Flanschabschnitte 14, vorgesehen werden, durch die nicht gezeigte Verbindungsbolzen geführt werden können. Für kleinere Rohre mit verhältnismäßig kurzen geraden Rohrabschnitten 12 genügen unter Umständen die in Fig. 10 eingezeichneten beiden Schraublöcher 58 zur dichten Verbindung der Flanschrahmen 10. Bei größeren Rohren werden zusätzlich Schraublöcher 60 nahe den Stoßstellen 62 der Flanschabschnitte vorgesehen, die zusätzlich auch den in den gebogenen Flanschabschnitt 14 eingefügten Halteteil 56 des Zwischenverbinders 54 durchsetzen. Der Kopf 64 eines durch das Schraubloch 60 geführten Schraubbolzens liegt dabei an einem an der Außenseite der Wand 40 des Flanschabschnitts 14 befestigten keilförmigen Beilagklotz 66 an, wodurch eine ausreichende Übertragung der Zugkraft des festgeschraubten Bolzens auf den Flanschrahmen 10 gewährleistet wird.

Diese Ausführungsform eignet sich auch besonders für eine fabrikseitig vorgefertigte Verankerung des Zwischenverbinders 54 am gebogenen Flanschabschnitt 14, so daß bauseitig nur mehr der zweite Halteteil 56 in den geraden Flanschabschnitt 12 eingeschoben und der fabrikseitig im Schraubloch 60 angebrachte Schraubbolzen durch den gegenüberliegenden Flanschrahmen 10 geführt und mit einer Mutter festgeschraubt werden muß.

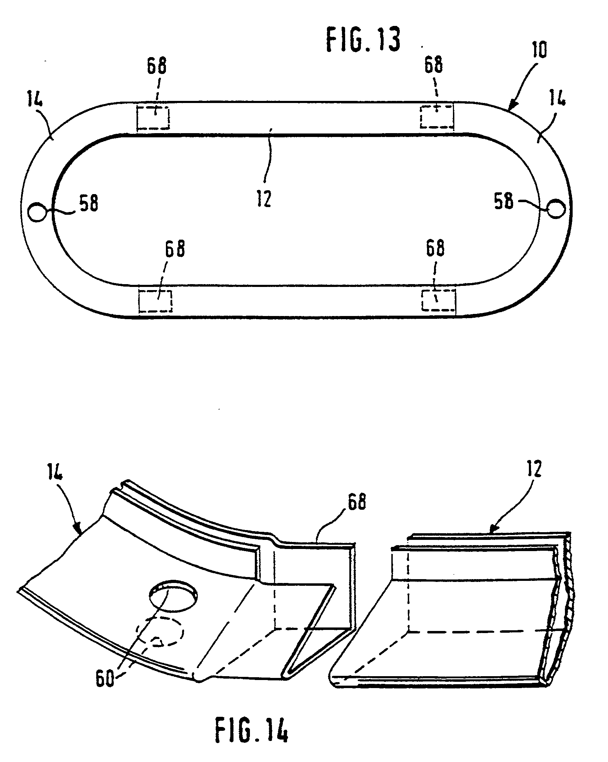

Bei der Ausführungsform gemäß Figuren 13 und 14 sind keine getrennten Zwischenverbinder vorgesehen, sondern der Zwischenverbinder besteht bei dieser Ausführungsform aus einem an den gebogenen Flanschabschnitt 14 unmittelbar angeformten Halteteil 68, der in das Ende des angrenzenden geraden Flanschabschnitts 12 eingeschoben wird. Dadurch erübrigt sich die Herstellung und Lagerhaltung getrennter Zwischenverbinder. Das Schraubloch 60 durchsetzt bei dieser Ausführungsform nur die Hohlprofilwände des gebogenen Flanschabschnitts 14. Je nach Größe des Rohrquerschnitts können mehr oder weniger Schraublöcher 58, 60 vorgesehen werden, wobei jedoch im allgemeinen zwei bis vier Schraublöcher genügen.

Die besonders einfache und preisgünstige Herstellung der Ovalrohrabschnitte als Wickelfalzrohre ergibt eine spiralförmige Naht, die entweder verschweißt oder mit einem nach außen stehenden Falz abgedichtet werden kann. Wenn die Herstellung mit einem vom Rohr nach außen stehenden Falz bevorzugt wird, kann dieser Falz das Einfädeln der Rohrenden zwischen die parallelen Enden der in den Figuren 4 bis 6 dargestellten Flanschprofile behindern. Für diesen Fall können andere Flanschprofile verwendet werden, deren Stege nur an der Innenseite der Flanschprofile anliegen, wie nachfolgend ausführlich erläutert.

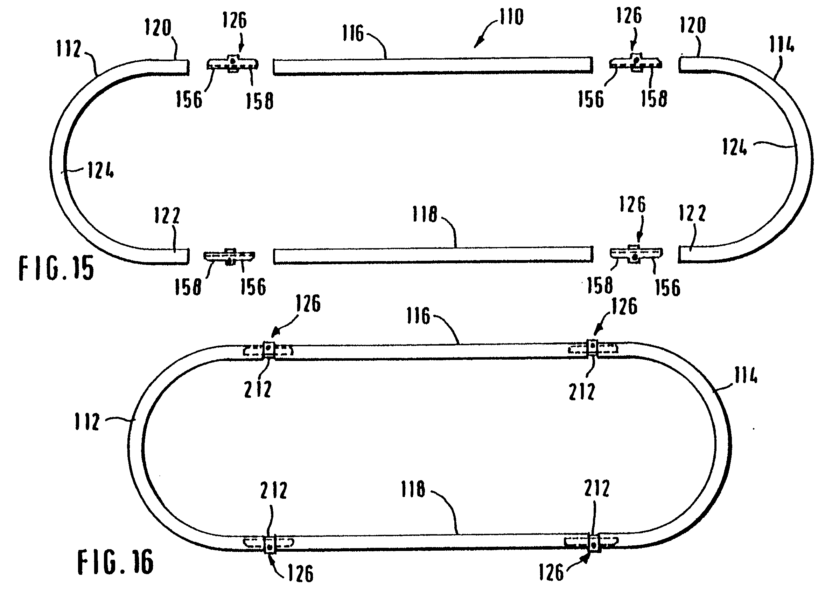

Die Figuren 15 und 16 zeigen weitere Ausführungsformen ovaler und mit dem Bezugszeichen 110 versehener Flanschrahmen nach dieser Erfindung. Der Flanschrahmen 110 enthält zwei gebogene Flanschabschnitte 112 und 114 und zwei dazwischen angeordnete geradlinige Flanschabschnitte 116 und 118. Die gebogenen Flanschabschnitte 112 und 114 haben jeweils geradlinige oder gerade Enden 120 und 122 und einen halbkreisförmigen Zwischenteil 124. Die gebogenen Flanschabschnitte 112 und 114 sind mit den dazwischen angeordneten geradlinigen Flanschabschnitten 116 und 118 durch mehrere Zwischenverbinder, die allgemein mit 126 bezeichnet sind, miteinander verbunden, was noch ausführlich beschrieben wird. Die gebogenen Flanschabschnitte 112 und 114 haben vorzugsweise ein gleiches Profil wie die geraden Flanschabschnitte 116 und 118. Das Profil selbst hat, wie noch auszuführen sein wird, Aufnahmeöffnungen für die als flache Stege ausgebildeten Halteteile des Zwischenverbinders 126. Es ist deshalb wünschenswert, daß die gebogenen Flanschabschnitte 112 und 114 jeweils gerade Enden 120 und 122 aufweisen, um die Stege des Zwischenverbinders 126 aufnehmen zu können.

Fig. 16 zeigt, wie die gebogenen Flanschabschnitte 112 und 114 mit den geraden Flanschabschnitten 116 und 118 mittels einer Mehrzahl von Zwischenverbindern 126, deren Halteteile in das Profil der Flanschabschnitte eingefügt werden, miteinander verbunden sind.

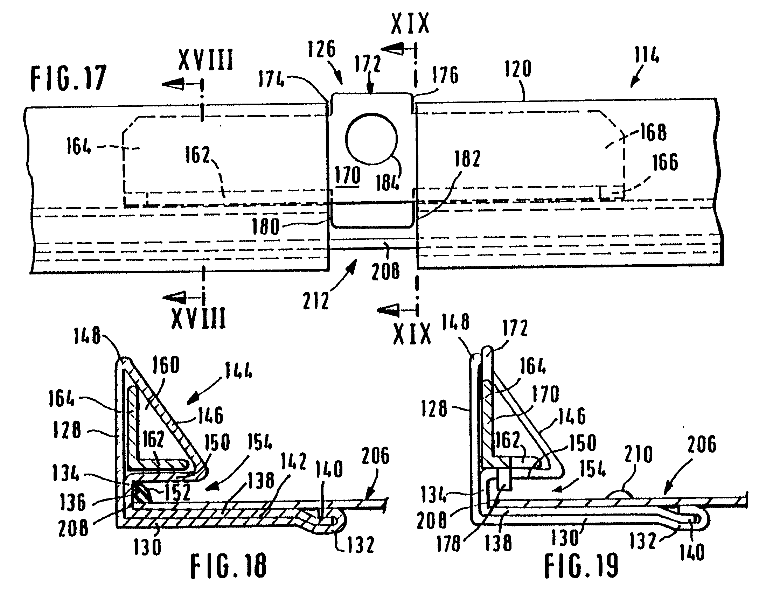

In Fig. 17 ist eine vergrößerte Darstellung des Zwischenverbinders 126 dargestellt, der die Enden der Flanschabschnitte, z.B. die Enden 120 des gebogenen Flanschabschnittes 114 und des geraden Flanschabschnittes 116, miteinander verbindet. Die gestrichelten Linien in Fig. 17 zeigen die Enden der Flanschabschnitte, die in einem anderen als senkrechten Winkel zur Längsachse der Flanschabschnitte geschnitten sind und wie die unteren und oberen Anschlagmittel an die nicht senkrechten Enden der Flanschabschnitte anstoßen.

Die gebogenen Flanschabschnitte 112 und 114 und die geraden Flanschabschnitte 116 und 118 haben alle im wesentlichen die gleiche Gestalt und sind aus einem flachen Stück dünnen Metalls gewalzt. Die Abschnitte des Flanschrahmens 110 haben ein Profil, wie es in den Schnittansichten der Figuren 18, 19, 21 und 22 gezeigt ist. Bezugnehmend auf die Fig. 18 haben die Flanschabschnitte eine senkrechte Innenwand 128 mit einem waagrechten unteren Flansch 130. Dieser Flansch 130 führt rechtwinklig von der vertikalen Innenwand 128 weg und weist ein zurückgebogenes Ende 132 auf, das — wie in Figuren 18 und 19 gezeigt — nach unten gedrückt ist. Die Flanschabschnitte verfügen auch über eine äußere vertikale Wand 134 mit einer äußeren vertikalen Oberfläche 136 und einen horizontal davon wegweisenden oberen Flansch 138. Der Flansch 138 führt abgewinkelt von der äußeren vertikalen Wand 134 weg und hat ein nach unten gebogenes Ende 140, das im zurückgebogenen Ende 132 des unteren Flansches 130 steckt. Der horizontale untere Flansch 130 und obere Flansch 138 stoßen aneinander, während das Ende 140 des oberen Flansches 138 klemmend in dem nach unten gebogenen zurückgebogenen Teil 132 sitzt. Der horizontale obere Flansch 138 hat eine nach oben zeigende Fläche 142, die im wesentlichen eine plane Oberfläche aufweist, wie in Fig. 18 dargestellt. Die gebogenen Flanschabschnitte weisen gebogene Teile des Flanschrahmens mit der planen oberen Außenfläche des oberen Flansches 138 in einer flachen gebogenen Fläche auf und — wie später beschrieben wird — mit der Unterseite der Rohrenden damit anstoßend.

Die Flanschabschnitte verfügen über einen versteifenden Teil, der allgemein mit dem Bezugszeichen 144 versehen ist und eine geneigte oder schräge Wand 146 aufweist, deren eines Ende mit dem oberen Teil 148 der vertikalen Innenwand 128 verbunden ist. Das gegenüberliegende Ende der geneigten Wand 146 ist mit einer nach innen gerichteten Wand 150 verbunden, die mit der äußeren vertikalen Wand 134 in Verbindung steht. Die versteifenden Teile 144 haben eine im wesentlichen dreieckige Form mit einer eine vorgegebene Schräge aufweisenden Wand 146 und der nach innen gerichteten Wand 150, die im Abstand zur Rohrwand angeordnet ist, wodurch Platz für einen Falzwulst der Rohrwand geschaffen ist. Die abgewinkelte Wand 146, die nach innen gerichtete Wand 150 und die innere vertikale Wand 138 bilden eine dreieckige Öffnung 160.

Wie später noch erläutert wird, sind die Flanschabschnitte an den Enden der Rohrabschnitte befestigt. Ein kittartiges Material 152 ist in der mit den Bezugszeichen 154 versehenen Aussparung plaziert, mit welchem die Enden der Rohre abgedichtet werden.

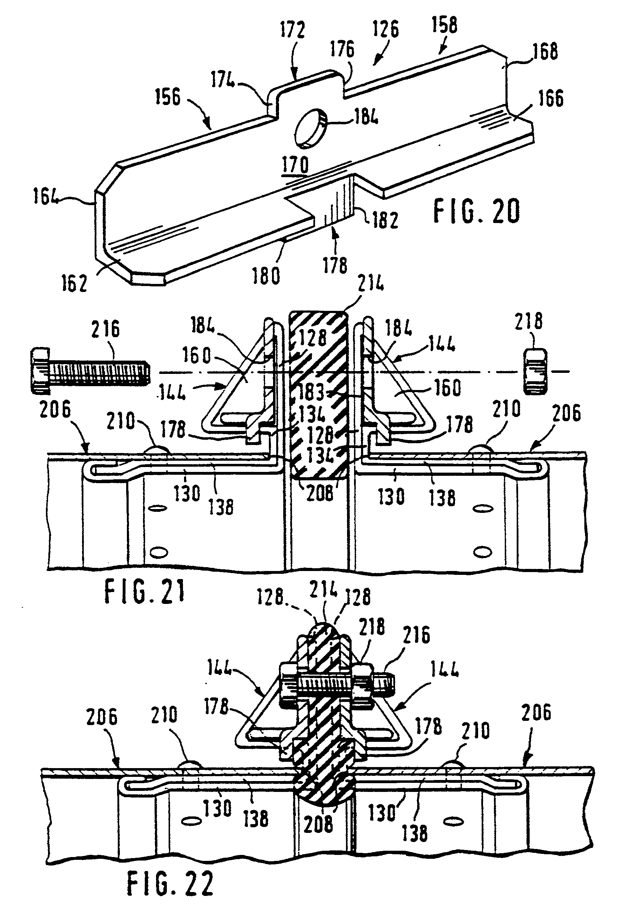

Die Figuren 20, 30 und 31 zeigen den Zwischenverbinder 126 und die Art und Weise, in der der Zwischenverbinder 126 die entsprechenden Flanschabschnitte miteinander verbindet. Der Zwischenverbinder 126 hat eine im wesentlichen abgewinkelte Form mit einem Befestigungsteil 170 und zwei davon wegweisenden Halteteilen 156 und 158. Die Halteteile 156 und 158 können in die dreieckigen Öffnungen 160 der entsprechenden Flanschabschnitte ragen. Der Halteteil 156 ist im wesentlichen L-förmig ausgebildet mit einem horizontal wegführenden Teil 162 und einem nach oben weisenden Teil 164. In gleicher Weise hat der andere Halteteil 158 einen horizontalen Teil 166 und einen nach oben weisenden Teil 168. Ein oberer Anschlag 172 erstreckt sich über den Befestigungsteil 170 hinaus zwischen die Halteteile 156 und 158. Der Anschlag 172 hat vertikale Stoßflächen 174 und 176, die als Anschlag für die Enden der Flanschabschnitte dienen. Der Befestigungsteil 170 hat auch einen nach unten ragenden Anschlag 178, der vertikale Stoßflächen 180 und 182 aufweist. Der Anschlag 178 ist bevorzugt am horizontalen Teil des Befestigungsteils 170 zwischen den Halteteilen 156 und 158 angeformt. Es kann jedoch auch ein separater und nach unten gerichteter Anschlag fest an der Unterseite des abgewinkelten Befestigungsteils 170 befestigt sein. Der Anschlag 178 ist, wie in Figuren 21 und 22 gezeigt, ausgehend von der Vorderseite 183 des Befestigungsteils 170 des Zwischenverbinders 126 nach hinten versetzt angeordnet. Diese Versetzung ist vorzugsweise größer als die Dicke der vertikalen Wand 128 und der vertikalen Wand 134. Der Befestigungsteil 170 hat ein Schraubloch 184, um die Flanschrahmen 110 miteinander verbinden zu können.

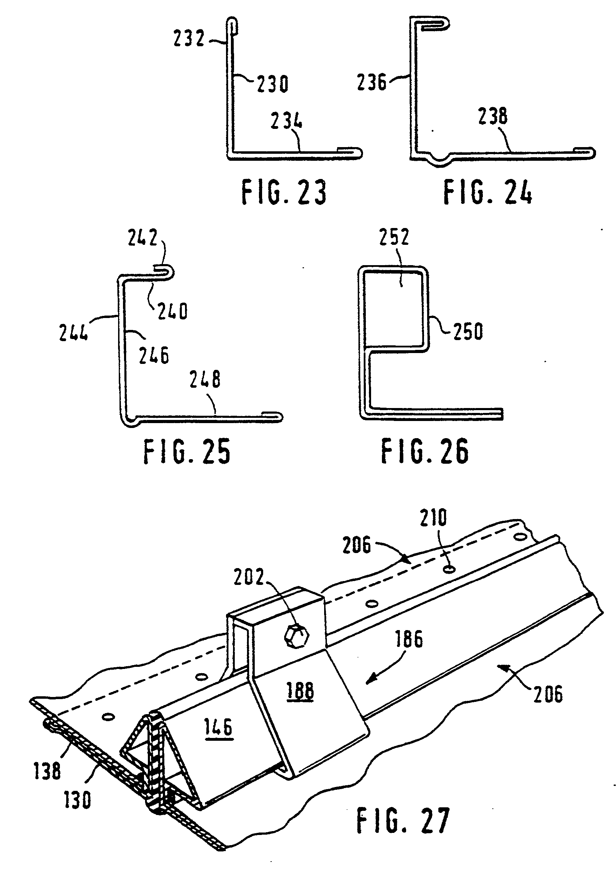

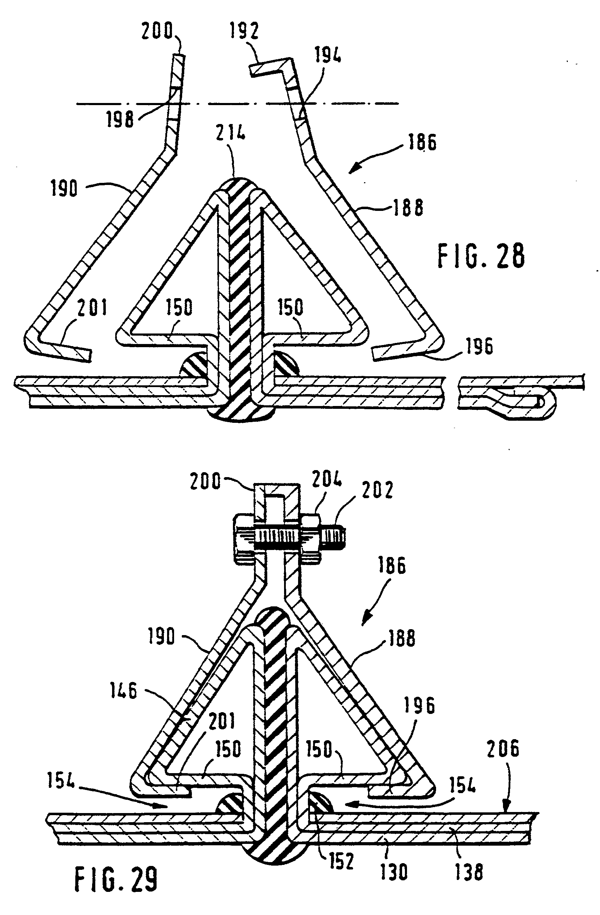

Die Figuren 27 bis 29 zeigen eine mit 186 bezeichnete Klemmeinrichtung, die dazu geeignet ist, die aneinanderstoßenden Flanschrahmen 110 aneinanderzudrücken. Diese Klemmeinrichtungen können, je nach Bedarf, beliebig entlang der Peripherie des Flanschrahmens plaziert sein, inclusive der gebogenen Flanschabschnitte 124. Die Klemmeinrichtung 186 enthält ein erstes Glied 188 und ein davon getrenntes zweites Glied 190. Das Glied 188 hat ein nach innen gebogenes oberes Flanschteil 192 und ein Schraubloch 194 für einen Schraubenbolzen. Der untere Teil des Gliedes 188 hat einen nach innen gebogenen Flansch 196, der unter den nach innen ragenden Teil 150 in die Ausnehmung 154 greifen kann. In ähnlicher Weise verfügt das zweite Glied 190 über ein Schraubloch 198 für einen Schraubenbolzen sowie einen oberen Rand 200. Das zweite Glied 190 hat einen unteren nach innen gebogenen Flansch 201, der unter den nach außen ragenden Teil 150 des versteiften Teils 144 greift. Ein Schraubenbolzen 202 ragt durch die entsprechenden Schraublöcher 194 und 198, wodurch die Glieder 188 und 190 fest um die versteiften Teile 144 der Flanschabschnitte mittels einer Mutter 204, die auf den Schraubenbolzen 102 geschraubt wird, gedrückt werden. Der Rand 200 des Teils 190 dient als Hebel für den nach innen gebogenen Flansch 201 des Teils 198, um die Glieder 188 und 190 um die entsprechenden versteifenden Teile 145 des Rahmens herum gegeneinander zu verspannen.

Bezugnehmend auf die Figuren 15 und 19 werden beim Zusammenbau des Flanschrahmens 10 die Halteteile 156 und 158 in den Öffnungen der geraden Enden 120 und 122 der in den Figuren 18 und 19 dargestellten Flanschabschnitte 112 und 114 angeordnet. Die anderen Halteteile 156 und 158 sind in den Öffnungen 160 der Enden der geraden Flanschabschnitte 116 und 118 plaziert, um die Rahmenstruktur zu bilden. Wie in Fig. 17 gezeigt, stoßen die Enden der Flanschabschnitte 114 und 116 an die Stoßflächen 174, 176 des oberen Anschlags 172 und an die Stoßflächen 180 und 182 des unteren Anschlags 178 des Befestigungsteils 170 an. Es versteht sich, daß, wenn die Enden der Flanschabschnitte 114 und 116 in anderer Weise als senkrecht, wie dies in Fig. 17 dargestellt ist, abgeschnitten sind, ein Rand des entsprechenden Flanschabschnittes entweder am oberen oder unteren Rand der Anschläge 172 und 178 anstößt.

Aufgrund der rechtwinkligen Form passen die Halteteile 156 und 158 gut in die Öffnungen 160 des Profils der entsprechenden Flanschabschnitte, wobei sie die entsprechenden Enden der Flanschabschnitte mit den Halteteilen, die an die vertikale Innenwand 128 und die nach innen gebogene Wand 150 stoßen, fest verbinden. Mit dieser Anordnung sind die Enden der entsprechenden Flanschabschnitte, beispielsweise 114 und 116, geradlinig und fest durch einen Zwischenverbinder miteinander verbunden.

Der Flanschrahmen 110 wird nach dessen Zusammenbau auf dem ovalen Rohr befestigt, dessen eines Ende in Figuren 19, 21 und 22 teilweise dargestellt ist. Änderungen in den Abmessungen des zusammengebauten Flanschrahmens können vorgesehen werden, um Abweichungen in den Abmessungen der ovalen Rohre auszugleichen, indem die gebogenen Flanschabschnitte 112 und 114 relativ zu den geraden Flanschabschnitten 116 und 118 bewegt werden. Die Flexibilität, um ovale Rohre unterschiedlicher Durchmesser miteinander zu verbinden, wird offensichtlich, wenn die geraden Abschnitte 116 und 118 in ihrer Länge so gewählt werden, daß ein ovales Rohr mit vorgegebenem Durchmesser daran angepaßt werden kann.

Das Ende des ovalen Rohrabschnitts ist allgemein mit dem Bezugszeichen 206 versehen und verfügt über einen vorderen Rand 208. Der Rohrabschnitt ist auf der oberen Fläche 142 des oberen Flansches 138 plaziert und stößt an die Oberfläche der äußeren vertikalen Wand 134 (Figuren 19 und 20). Geeignete Befestigungsmittel, wie Nieten, Punktschweißungen oder ähnliches, die mit dem Bezugszeichen 210 versehen sind, befestigen das Rohrende 206 fest am Flanschabschnitt über dem oberen Flansch 138 und unteren Flansch 130. Das Rohrende 208 wird bis zum Anstoßen an die äußere Oberfläche 136 der vertikalen Außenwand 134 bewegt, bevor es an dem Flansch 130 und 138 befestigt wird und das Kittmaterial 152 in die Ausnehmung 154 zum Abdichten des Rohrendes 208 angebracht wird. Mit dieser Einrichtung wird das Rohrende 206 an dem zusammengebauten Flanschrahmen 110 befestigt.

Wie in Fig. 19 dargestellt ist, ist der untere Anschlag 178 vom vertikalen Teil des Befestigungsteils 170 des Zwischenverbinders nach hinten versetzt angeordnet und der obere Anschlag 172 ragt in die gleiche Ebene wie der Befestigungsteil 170. die Figuren 17 und 19 zeigen, wie der Rohrrand 208 vom unteren Rand des unteren Anschlags beabstandet ist.

Wie in Figuren 19, 21 und 31 dargestellt, ragt der Rohrrand 208 über den unteren Anschlag hinaus und stößt gegen die vertikale Außenwand 134. Ein Spalt 212 ist zwischen den Rändern der Zwischenverbinder 126 durch die Anschläge 172 und 178 gebildet. Durch den Spalt 212 und den versetzten Anschlag 178 kann der Rohrrand über einen Dichtungsstreifen 214 abgedichtet werden.

Nachdem der ovale Flanschrahmen 110, wie oben beschrieben, zusammengebracht wurde und an dem Ende 206 eines ovalen Rohres 208 befestigt ist, werden zwei Rohrabschnitte mit der vertikalen Innenwand 128 jedes sich gegenüberliegenden Rahmens 110 aneinanderstoßend zusammengebracht. Ein fortlaufender Dichtungsstreifen 214 wird zwischen die Außenflächen der vertikalen Innenwände 128 — wie in Fig. 30 dargestellt — plaziert.

Zwei Flanschrahmen 110 sind so zusammengebaut, daß die Schraublöcher 184 von sich gegenüberliegenden Zwischenverbindern 126 aufeinander ausgerichtet sind. Durch diese Schraublöcher 184 sind Schrauben 216 gesteckt und eine Mutter 218 auf deren Gewinde geschraubt. Der Dichtstreifen 214 erstreckt sich vorzugsweise unter die Schraublöcher 184 der Zwischenverbinder 126. Der Dichtstreifen 214 kann sich jedoch auch, wie schematisch in Fig. 21 dargestellt, darüber hinaus erstrecken. Die Schrauben 216 können durch die Dichtstreifen 214 geführt sein.

Der Dichtstreifen 214 hat im entspannten Zustand, wenn die Rahmen 110 noch nicht zusammengeschraubt sind, einen rechteckigen Querschnitt, wie in Fig. 21 gezeigt. Wenn die Muttern 218 auf die Schrauben 216 geschraubt werden, bewegen sich die Zwischenverbinder 126 und die Flanschrahmen 110 aufeinander zu, wobei der dazwischenliegende Dichtstreifen 214 zusammengedrückt und dabei die Verbindung zwischen den entsprechenden Rohrabschnitten 206 abgedichtet wird. Aus Fig. 21 wird deutlich, daß der sich um den Umfang des Flanschrahmens 110 erstreckende Dichtstreifen durch eine Stoßverbindung mit den vertikalen Außenflächen der vertikalen Innenwände 128 den entsprechenden Flanschrahmen 110 abdichtet.

Der im Flanschrahmen 110 durch die Zwischenverbinder gebildete Spalt 212 wird auch durch den Dichtstreifen 214 abgedichtet. Die Dichtung für den Spalt 212 wird durch den nach hinten versetzten unteren Anschlag 178 auf dem Befestigungsteil des Zwischenverbinders 126 erreicht. Dort, wo die Wände 128 nebeneinanderliegender Flanschabschnitte enden, befindet sich ein Spalt, in den sich der Dichtungsstreifen erstreckt. Der Rand 208 des Rohrendes 206 steckt in dem verformten Teil des Dichtstreifens, so wie es in Fig. 22 dargestellt ist, wodurch der Rohrrand 208 im Spalt 212 abgedichtet wird.

Der versetzte Anschlag 178 dient dem Dichtmaterial auch als eine Art Gegenstütze, damit die Verformung des Dichtmaterials in Grenzen gehalten und nach unten und um den Rand 208 des Rohrendes gezwungen wird. Fig. 22 zeigt die auf der Schraube 216 festgezogene Mutter 218, wodurch der Dichtstreifen 214 verformt und abdichtend gegen die in Fig. 22 strichliert dargestellten vertikalen Wände 128 und den Rand 208 des Rohrendes 206 gedrückt wird. Mit dieser Anordnung können die Enden ovaler Rohre einfach anhand der durch die Schraublöcher der Zwischenverbinder 126 gesteckten Schrauben 216 sicher miteinander verbunden werden.

Dort wo die Abmessungen der Rohre besonders lang sind, können ein oder mehrere Klemmeinrichtungen, ähnlich der in Figuren 27 bis 29 gezeigten, um die versteifenden Teile 144 des Flanschrahmens angeordnet sein, damit der Rlanschrahmen noch mehr gegen die Dichtungsstreifen drückt. Diese Klemmeinrichtungen 186 sind so dimensioniert, daß sie entweder an den geraden oder gebogenen Flanschabschnitten angeordnet werden können.

Es versteht sich, daß der Flanschrahmen gegebenenfalls aus mehr oder weniger als den in Fig. 15 dargestellten vier Flanschabschnitten zusammengesetzt werden kann. Z.B. können die gebogenen Flanschabschnitte 112 und 114 für bestimmte ovale Rohrabmessungen verlängerte gerade Endteile 120 und 122 enthalten, wobei diese dann durch Zwischenverbinder 126 verbunden werden, um eine Rohrverbindung aus zwei Flanschrahmen zu bilden. Es können auch andere Ausführungen vorgesehen werden, so z.B. gerade Teile in den gebogenen Flanschabschnitten 124, damit ein ovaler Rahmen mit relativ kurzen geraden Zwischenteilen gebildet wird. Die geraden Flanschabschnitte 116 und 118 können aus mehreren einzelnen Teilen zusammengesetzt sein. Wenn das Profil durch Walzen gebildet wird, sind die geraden Zwischenabschnitte nicht erforderlich. Voneinander getrennte kurze Abschnitte können jedoch dort, wo es gewünscht wird, verwendet werden, um die durch die Schrauben 216 in den Zwischenverbindern ausgeübte Klemmwirkung auszunutzen. Aus dem Vorstehenden wird ersichtlich, wie vielseitig der Flanschrahmen 110 aus den beschriebenen Teilen gebildet werden kann.

Obwohl in den Figuren 18, 19, 20 und 21 ein spezielles Profil für die Flanschabschnitte dargestellt ist, versteht es sich, daß auch andere Profile verwendet werden können, so z.B. die in Fig. 23 bis 26 gezeigten Profile. Das Winkelprofil von Fig. 23 kann Verwendung finden, indem die Halteteile des Zwischenverbinders an der Innenwand 230 des nach oben stehenden Schenkels 232 und das Rohrende 206 entweder auf der oberen oder unteren Fläche des abgewinkelten Schenkels 234 plaziert werden. In Fig. 24 kann der Zwischenverbinder mit der Innenwand des senkrechten Schenkels 236 und der Rohrabschnitt mit der oberen oder unteren Fläche des waagrechten Schenkels 238 verbunden werden. In den Figuren 23 und 24 sind die zurückgebogenen Enden als Verstärkungsmittel für den Flanschrahmen vorgesehen. In ähnlicher Weise führt in Fig. 25 ein waagrechter oberer Schenkel 240 mit einem zurückgebogenen Teil 242 vom senkrechten Schenkel 244 weg, um den Flanschrahmen zu verfestigen und die Halteteile an die Innenwand 246 des senkrechten Schenkels 244 anstoßen zu lassen. Das Rohrende 206 kann an der oberen oder unteren Fläche des horizontal wegführenden Schenkels 248 befestigt sein. In Fig. 26 hat das Profil eine im wesentlichen durch zwei senkrechte Schenkel gebildete rechteckige Form, damit die Halteteile 156 und 158 des Zwischenverbinders aufgenommen werden können. Es ist selbstverständlich, daß die Schenkel auch andere Formen, die durch die Aufnahmeöffnungen der Flanschabschnitte bestimmt sind, haben können. Es versteht sich auch, daß mit den oben beschriebenen Ausgestaltungen ein Spalt am Zwischenverbinder ausgebildet ist und der Rand 208 des Rohrabschnitts 206 über den unteren Anschlag hinausragt, um im Spalt eine Dichtung für den Rohrrand vorzusehen.

## Patentansprüche

1. Stoßverbindung zwischen zwei flachovalen Rohrabschnitten (28) aus Blech, wobei auf das Ende (26) jedes Rohrabschnitts (28) ein Flanschrahmen (10) aufgesteckt und daran festgelegt ist und Verbindungseinrichtungen (36, 38) zum dichten Aneinanderfügen der beiden Flanschrahmen (10) vorgesehen sind, dadurch gekennzeichnet, daß jeder Flanschrahmen (10) nur aus je zwei einander gegenüberliegenden geraden (12) und zwei einander gegenüberliegenden, im wesentlichen halbkreisförmig gebogenen (14) Flanschabschnitten besteht, die als Hohlprofile ausgebildet sind und daß die Flanschabschnitte (12, 14) durch Halteeinrichtungen (16) in ihrer gegenseitigen Lage gehalten sind.

2. Stoßverbindung nach Anspruch 1, dadurch gekennzeichnet, daß die Halteeinrichtungen aus Zwischenverbindern (16) bestehen, die jeweils in die offenen Enden eines geraden (12) und eines gebogenen (14) Flanschabschnitts gesteckte Halteteile (18) aufweisen.

3. Stoßverbindung nach Anspruch 2, dadurch gekennzeichnet, daß jeder Zwischenverbinder (16) zwischen den Halteteilen einen Befestigungsteil (20) aufweist, an den die Enden der Flanschabschnitte (12, 14) stoßen und infolgedessen einen Spalt einschließen.

4. Stoßverbindung nach Anspruch 2 oder 3, dadurch gekennzeichnet, daß wenigstens ein Halteteil (18) jedes Zwischenverbinders (16) an dem ihn umfassenden Flanschabschnitt (12, 14)befestigt ist.

5. Stoßverbindung nach Anspruch 4, dadurch gekennzeichnet, daß der in den gebogenen Flanschabschnitt (14) gesteckte Halteteil (18) an diesembefestigt ist.

6. Stoßverbindung nach Anspruch 4, dadurch gekennzeichnet, daß beide Halteteile (18) an den benachbarten Flanschabschnitten (12, 14)befestigt sind.

7. Stoßverbindung nach Anspruch 1, dadurch gekennzeichnet, daß die Halteeinrichtungen jeweils aus einem mit einem gebogenen Flanschabschnitt (14) einstückigen Halteteil (68) bestehen, der in das offene Ende eines geraden Flanschabschnittes (12) gesteckt ist.

8. Stoßverbindung nach einem der Ansprüche 2 bis 7, dadurch gekennzeichnet, daß die Halteteile (18, 18′) an den sie umfassenden Flanschabschnitten (12, 14 ; 12′, 14′) durch aus der Fläche der Flanschabschnitte teilausgestanzte und nach innen gedrückte Lappen (52, 52′) gehalten sind, die in Vertiefungen (50, 50′) der Halteteile (18, 18′) eingreifen.

9. Stoßverbindung nach einem der vorangehenden Ansprüche, dadurch gekennzeichnet, daß die Verbindungseinrichtungen wenigstens zwei Schraublöcher (36) an jedem Flanschrahmen (10) aufweisen, welche jeweils einen Flanschabschnitt (12, 14) und/oder jeweils eine Halteeinrichtung (16) parallel zur Wandung der Rohrabschnitte (28) durchsetzen, und daß durch gegenüberliegende Schraublöcher (36) der zwei Flanschrahmen (10) Verbindungsbolzen (38) geführt sind.

10. Stoßverbindung nach den Ansprüchen 3 und 9, dadurch gekennzeichnet, daß jeder Befestigungsteil (20) ein Schraubloch (36) enthält.

11. Stoßverbindung nach Anspruch 9 oder 10, dadurch gekennzeichnet, daß zur Anlage der Köpfe (64) bzw. Muttern (39) der Verbindungsbolzen (38) an der Außenseite der Flanschabschnitte (12, 14) dem Außenprofil derselben angepaßte Beilagklötze vorgesehen sind.

12. Stoßverbindung nach Anspruch 11, dadurch gekennzeichnet, daß die Beilagklötze (66) am jeweiligen Flanschabschnitt (12, 14) festgelegt sind.

13. Stoßverbindung nach einem der Ansprüche 3 bis 12, dadurch gekennzeichnet, daß jeder Halteteil als profilierter Steg (156, 158) ausgebildet ist und daß jeder Befestigungsteil (170) einen nach hinten versetzten Anschlag (178) aufweist, um das Ende des Rohrabschnitts (206) über den Anschlag (178) hinausragen zu lassen.

14. Stoßverbindung nach einem der vorangehenden Ansprüche, dadurch gekennzeichnet, daß die Flanschabschnitte (12, 14) ein im wesentlichen dreieckförmiges Hohlprofil aufweisen.

15. Stoßverbindung nach einem der Ansprüche 2 bis 14, dadurch gekennzeichnet, daß die Halteteile (156, 158) L-förmigen Querschnitt besitzen.

16. Stoßverbindung nach einem der Ansprüche 2 bis 14, dadurch gekennzeichnet, daß die Halteteile (18) dreieckförmigen Querschnitt besitzen und in die Enden der Flanschabschnitte (12, 14) passen.

17. Stoßverbindung nach einem der Ansprüche 14 bis 16, dadurch gekennzeichnet, daß jeder Befestigungsteil (20) rechteckigen Querschnitt besitzt.

18. Stoßverbindung nach einem der vorangehenden Ansprüche, dadurch gekennzeichnet, daß die Verbindungseinrichtungen an den gegenüberliegenden Flanschrahmen (110) angreifende Klemmeinrichtungen (186) aufweisen.

19. Stoßverbindung nach Anspruch 18, dadurch gekennzeichnet, daß zum Angreifen der Klemmeinrichtungen die von den Rohrabschnitten (28) abgelegene Ecke des dreieckförmigen Profils der Flanschrahmen (10) einen Wulst (46) aufweist.

20. Stoßverbindung nach einem der vorangehenden Ansprüche, dadurch gekennzeichnet, daß zwischen den beiden Flanschrahmen (10) eine Dichtung (34) vorgesehen ist.

21. Stoßverbindung nach einem der Ansprüche 3 bis 20, dadurch gekennzeichnet, daß die Dichtung (214) sich abdichtend in den Spalt (212) hinein erstreckt.

22. Stoßverbindung nach einem der vorangehenden Ansprüche, dadurch gekennzeichnet, daß das Hohlprofil jedes Flanschrahmens (10) zwei parallele, in geringem Abstand voneinander verlaufende Stege (24) aufweist, zwischen die jeweils das Ende (26) eines Rohrabschnitts (28) eingeschoben und an denen es befestigt ist.

23. Stoßverbindung nach Anspruch 22, dadurch gekennzeichnet, daß einer der beiden Stege (24) zum leichteren Einfädeln eines Rohrabschnitts (28) einen abgewinkelten Einfädelrand (44) aufweist.

24. Stoßverbindung nach einem der Ansprüche 1 bis 21, dadurch gekennzeichnet, daß das Hohlprofil jedes Flanschrahmens (110) zwei parallel aneinanderliegende Stege (130, 138) aufweist, die jeweils an der Innen-

9

seite eines Rohrabschnitts (206) befestigt sind.

25. Stoßverbindung nach einem der Ansprüche 22 bis 24, dadurch gekennzeichnet, daß in die Flanschabschnitte (12, 14) eine zwischen diesen und dem damit verbundenen Rohrabschnitt (28) abdichtende dauerplastische Dichtungsraupe (48) eingespritzt ist.

26. Stoßverbindung nach Anspruch 24 oder 25, dadurch gekennzeichnet, daß das Hohlprofil jedes Flanschrahmens (110) dreieckförmig ausgebildet ist und einen zu dem zugehörigen Rohrabschnitt (206) radialen Abstand aufweist.

## Claims

1. Butt-joint connection between two flat-oval pipe sections (28) made from sheet metal, wherein a flange frame (10) is pushed onto the end (26) of each pipe section (28) and fixed to it, and connecting devices (36, 38) are provided for seal-tight assembly of the two flange frames (10), characterised in that each flange frame (10) consists of only two opposing straight flange sections (12) and two opposing essentially semi-circular curved flange sections (14), which are designed as hollow profiles, and in that the flange sections (12, 14) are retained in their opposite position by retaining devices (16).

2. Butt-joint connection according to claim 1, characterised in that the retaining devices consist of two intermediate connectors (16) which each have retaining parts (18) pushed in the open ends of a straight flange section (12) and a curved flange section (14).

3. Butt-joint connection according to claim 2, characterised in that each intermediate connector (16) has an attachment part (20), at which the ends of the flange sections (12, 14) abut and consequently surround a gap, between the retaining parts.

4. Butt-joint connection according to claim 2 or 3, characterised in that at least one retaining part (18) of each intermediate connector (16) is attached to the flange section (12, 14) surrounding it.

5. Butt-joint connection according to claim 4, characterised in that the retaining part (18) pushed into the curved flange section (14) is attached to it.

6. Butt-joint connection according to claim 4, characterised in that both retaining parts (18) are attached to the neighbouring flange sections (12, 14).

7. Butt-joint connection according to claim 1, characterised in that the retaining devices each consist of a retaining part (68) integral with a curved flange section (14) and which is pushed into the open end of a straight flange section (12).

8. Butt-joint connection according to one of claims 2 to 7, characterised in that the retaining parts (18, 18') are retained at the flange sections (12, 14 ; 12', 14') surrounding them by means of flaps (52, 52') partly punched out of the surface of the flange sections and pressed inwards, and which engage in recesses (50, 50') of the retaining parts (18, 18').

9. Butt-joint connection according to one of the preceding claims, characterised in that the connecting devices have at least two threaded holes (36) at each flange frame (10) which each penetrate a flange section (12, 14) and/or a retaining device (16) parallel to the wall of the pipe sections (28), and in that connecting bolts (38) are guided through opposing threaded holes (36) in the two flange frames (10).

10. Butt-joint connection according to claims 3 and 9, characterised in that each attachment part (20) contains a threaded hole (36).

11. Butt-joint connection according to claim 9 or 10, characterised in that shim blocks matched to the external profile of the flange sections (12, 14) are provided on the outside of the same to position the heads (64) or nuts (39) of the connecting bolts (38).

12. Butt-joint connection according to claim 11, characterised in that the shim blocks (66) are fixed to the particular flange section (12, 14).

13. Butt-joint connection according to one of claims 3 to 12, characterised in that each retaining part is designed as a profiled bar (156, 158), and in that each attachment part (170) has a stop (178) offset towards the back to allow the end of the pipe section (206) to project beyond the stop (178).

14. Butt-joint connection according to one of the preceding claims, characterised in that the flange sections (12, 14) have an essentially triangular hollow profile.

15. Butt-joint connection according to one of claims 2 to 14, characterised in that the retaining parts (156, 158) have L-shaped cross-section.

16. Butt-joint connection according to one of claims 2 to 14, characterised in that the retaining parts (18) have triangular cross-section and fit into the ends of the flange sections (12, 14).

17. Butt-joint connection according to one of claims 14 to 16, characterised in that each attachment part (20) has rectangular cross-section.

18. Butt-joint connection according to one of the preceding claims, characterised in that the connecting devices have clamping devices (186) engaging on the opposite flange frames (110).

19. Butt-joint connection according to claim 18, characterised in that the corner of the triangular profile of the flange frames (10) formed by the pipe sections (28) has a protrusion (46) for engaging the clamping devices.

20. Butt-joint connection according to one of the preceding claims, characterised in that a seal (34) is provided between the two flange frames (10).

21. Butt-joint connection according to one of claims 3 to 20, characterised in that the seal (214) extends in a sealing manner into the gap (212).

22. Butt-joint connection according to one of the preceding claims, characterised in that the hollow profile of each flange frame (10) has two parallel bars (24) extending at a slight distance from one another and between which each end (26) of a pipe section (28) is pushed and to which it is attached.

23. Butt-joint connection according to claim 22, characterised in that one of the two bars (24) has a bent threading-in edge (44) to thread a pipe section (28) in more easily.

24. Butt-joint connection according to one of claims 1 to 21, characterised in that the hollow profile of each flange frame (110) has two parallel adjacent bars (130, 138) which are each attached to the inner side of a pipe section (206).

25. Butt-joint connection according to one of claims 22 to 24, characterised in that a durable plastic sealing bead (48) is injected into the flange sections (12, 14) to form a seal between them and the pipe section (28) connected to them.

26. Butt-joint connection according to claim 24 or 25, characterised in that the hollow profile of each flange frame (110) has a triangular shape and is at a radial distance from the associated pipe section (206).


**Revendications**

1. Joint bout à bout entre deux sections de tuyaux (28) en tôle, de forme ovale plane, dans lequel l'extrémité (26) de chaque section de tuyau (28) est emmanchée sur un cadre de flasque (10) et fixée à celui-ci, et des dispositifs de liaison (36, 38) ont été prévus pour assurer une jonction étanche des deux cadres de flasque (10), joint bout à bout caractérisé en ce que chaque cadre de flasque (10) consiste seulement en deux sections de flasques droites (12) se faisant face et deux sections de flasques cintrées (14) de forme essentiellement semi-circulaire, situées en vis-à-vis, qui ont la forme de profilés creux et en ce que les sections de flasques (12, 14) sont maintenues dans leur position côte à côte par des dispositifs d'arrêt (16).

2. Joint bout à bout selon la revendication 1, caractérisé en ce que les dispositifs d'arrêt consistent en organes de liaison intermédiaires (16), qui présentent chacun des parties d'arrêt (18) enfoncées chacune dans les extrémités ouvertes d'une section de flasque droite (12) et d'une section de flasque cintrée (14).

3. Joint bout à bout selon la revendication 2, caractérisé en ce que chaque organe de liaison intermédiaire (16) présente une partie de fixation (20) entre les parties d'arrêt, partie de fixation sur laquelle les extrémités des sections de flasques (12, 14) viennent en butée et en conséquence ménagent une fente.

4. Joint bout à bout selon la revendication 2 ou 3, caractérisé en ce que au moins une partie d'arrêt (18) de chaque organe de liaison intermédiaire (16) est fixée sur la section de flasque (12, 14) l'entourant.

5. Joint bout à bout selon la revendication 4, caractérisé en ce que la partie d'arrêt (18) enfoncée dans la section de flasque cintrée (14) est fixée à celle-ci.

6. Joint bout à bout selon la revendication 4, caractérisé en ce que les deux parties d'arrêt (18) sont fixées sur les sections de flasques voisines (12, 14).

7. Joint bout à bout selon la revendication 1, caractérisé en ce que les dispositifs d'arrêt consistent chacun en une partie d'arrêt d'une seule pièce avec une section de flasque cintrée, partie qui est enfoncée dans l'extrémité ouverte d'une section de flasque droite (12).

8. Joint bout à bout selon l'une des revendications 2 à 7, caractérisé en ce que les parties d'arrêt (18, 18') sont maintenues sur les sections de flasques (12, 14 ; 12', 14') les entourant par des languettes (52, 52') partiellement matricées à partir de la face des sections de flasques et pressées vers l'intérieur, languettes qui viennent en prise dans des renfoncements (50, 50') des parties d'arrêt (18, 18').

9. Joint bout à bout selon l'une des revendications précédentes, caractérisé en ce que les dispositifs de liaison présentent au moins deux trous de boulons (36) sur chaque cadre de flasque (10), qui traversent chacun une section de flasque (12, 14) et/ou chacun un dispositif d'arrêt (16) parallèlement à la paroi de la section de tuyau (28) et en ce que des boulons d'assemblage (38) sont passés à travers les trous de boulons (36), situés en face, des deux cadres de flasque (10).

10. Joint bout à bout selon les revendications 3 et 9, caractérisé en ce que chaque partie de fixation (20) contient un trou de boulon (36).

11. Joint bout à bout selon la revendication 9 ou 10, caractérisé en ce qu'il est prévu des blocs de calage pour l'appui des têtes (64) ou des écrous (39) des boulons d'assemblage (38) sur le côté extérieur des sections de flasques (12, 14), adaptés au profil extérieur de celles-ci.

12. Joint bout à bout selon la revendication 11, caractérisé en ce que les blocs de calage (66) sont fixés sur chacune des sections de flasques (12, 14).

13. Joint bout à bout selon l'une des revendication 3 à 12, caractérisé en ce que chaque partie d'arrêt est formée comme une aile profilée (156, 158) et en ce que chaque partie de fixation (170) présente une butée (178) déportée vers l'arrière, pour faire saillir l'extrémité de la section de tuyau (206) au-dessus de la butée (178).

14. Joint bout à bout selon l'une des revendications précédentes, caractérisé en ce que les sections de flasques (12, 14) présentent un profil creux de forme essentiellement triangulaire.

15. Joint bout à bout selon l'une des revendications 2 à 14, caractérisé en ce que les parties d'arrêt (156, 158) possèdent une section transversale en forme de L.

16. Joint bout à bout selon l'une des revendications 2 à 14, caractérisé en ce que les parties d'arrêt (18) possèdent une section transversale en forme de triangle et s'ajustent dans les extrémités des sections de flasques (12, 14).

17. Joint bout à bout selon l'une des revendications 14 à 16, caractérisé en ce que chaque partie de fixation (20) possède une section transversale rectangulaire.

18. Joint bout à bout selon l'une des revendications précédentes, caractérisé en ce que les dispositifs de liaison présentent des dispositifs de serrage (186) venant en prise sur les cadres de flasques (110) se faisant vis-à-vis.

19. Joint bout à bout selon la revendication 18, caractérisé en ce que le cadre de flasque (10) présente un bourrelet (46) pour que les dispositifs de serrage viennent en prise avec les angles situés à l'opposé des sections de tuyau (28) du profilé en forme de triangle des cadres de flasque (10).

20. Joint bout à bout selon l'une des revendications précédentes, caractérisé en ce qu'il est prévu entre les deux cadres de flasque (10) un joint d'étanchéité (34).

21. Joint bout à bout selon l'une des revendications 3 à 20, caractérisé en ce que le joint d'étanchéité (214) pénètre dans la fente (212) en assurant l'étanchéité.

22. Joint bout à bout selon l'une des revendications précédentes, caractérisé en ce que le profil creux de chaque cadre de flasque (10) présente deux ailes (24) s'étendant parallèlement, à une petite distance l'une de l'autre, entre lesquelles est enfoncée l'extrémité (26) d'une section de tuyau (28) et auxquelles elle est fixée.

23. Joint bout à bout selon la revendication 22, caractérisé en ce que l'une des deux ailes (24) d'une section de tuyau (28) présente un bord d'insertion (44) coudé pour un enfilage plus facile.

24. Joint bout à bout selon l'une des revendications 1 à 21, caractérisé en ce que le profil creux de chaque cadre de flasque (110) présente deux ailes situées parallèlement l'une à l'autre (130, 138), qui sont fixées chacune sur le côté intérieur d'une section de tuyau (206).

25. Joint bout à bout selon l'une des revendications 22 à 24, caractérisé en ce que dans les sections de flasque (12, 14) est injecté entre ces sections et la section de tuyau (28) reliée avec un cordon d'étanchéité (48) restant souple en permanence.

26. Joint bout à bout selon la revendication 24 ou 25, caractérisé en ce que le profil creux de chaque cadre de flasque (110) a une forme triangulaire et présente un écart radial par rapport à la section de tuyau correspondante (206).

FIG.1

FIG.2

FIG. 3

18

22

20

16

18

36

22

FIG.4

10

$\alpha$

40

30

44

28 24 26 42

46

10

44

40

30

28 24 26 42

FIG.5

46

10

44

40

30

48

28 24 26 42

FIG.6

FIG.7

FIG.8

FIG.9

FIG.10

FIG.11

FIG.12

FIG.13

FIG.14

FIG.16

FIG.15

FIG.17

FIG.18

FIG.19

EP 0 379 002 B1

FIG. 20

FIG. 21

FIG. 22

232 — 230 — 234

## FIG. 23

236 — 238

## FIG. 24

242 — 240 — 244 — 246 — 248

## FIG. 25

252 — 250

## FIG. 26

210 — 206 — 202 — 186 — 188 — 146 — 206 — 138 — 130

## FIG. 27

FIG. 28

FIG. 29

FIG. 30

138
130
170 172
176
174
156
144 146
164
128
160
158
166 168
160
128
150
184
182 178 180

23

206
138
130
172
156
176
174
128
158
128
134
178
212 208

FIG. 31

EP 0 379 002 B1